# EUROPEAN PATENT APPLICATION

(11) **EP 3 581 892 A1**
(43) Date of publication of application: **18.12.2019**
(21) Application number: 18193380.5
(22) Date of filing: 10.09.2018
(51) Int. Cl.: G01D 4/00, G06Q 20/06, G06Q 20/14, G06Q 20/36, G06Q 50/06, G07F 15/00, G07F 15/06

(54) **INTELLIGENT GAS METER SYSTEM WITH LIGHT WALLET**

(30) Priority: 14.06.2018 CN 201810613354
(71) Applicant: Hepu Technology Development (Beijing) Co. Ltd., 100176 Beijing (CN)
(72) Inventor: Cui, Hua, Beijing (CN); Yang, Yusen, Beijing (CN)
(74) Representative: Huang, Liwei

(57) **Abstract**

The present invention discloses an intelligent gas meter system with a light wallet, comprising a CPU for processing and operating data in the intelligent gas meter and controlling data exchange, a flow metering and control module for controlling a gas supply of an individual pipe and metering the supplied gas amount, a blockchain light wallet module for performing data interaction with the CPU and an external committer, and a communication module for implementing the data transmission among the CPU, the flow metering and control module and the blockchain light wallet module, and the data transmission in the blockchain network. The present invention records gas transactions related to this gas meter by providing a blockchain light wallet module, and combines with a committer in a blockchain network, such that the final gas amount information and gas transaction information are stored in the blockchain network in a distributive and tamper-proofing manner.

## Description

### FILED OF THE INVENTION

The present invention relates to the field of intelligent gas meter and blockchain technologies, in particular to an intelligent gas meter system with a light wallet.

### BACKGROUND OF THE INVENTION

With continuous price reform of resource products of China in 2016, subsequent to the residential tiered pricing for both electricity and water, the tiered pricing for gas in question for many years goes near gradually. According to the NDRC (National Development and Reform Commission) it is issued that until 2016, the tiered pricing for gas would be carried out through all cities where natural gas has been piped. The implementation of tiered pricing for gas brings about new requirements for natural gas metering undoubtedly, which directly generates a need for an intelligent gas meter. Till 2016, the intelligent gas meter had had a market demand up to RMB 11 billions. Various factors accelerates the increase in the market demand. The intelligent gas meter industry in China is now promising. The rapid increase in the demand of the intelligent gas meter not only profits from a great support for clean energy such as natural gas in China, but also from various other aspects.

About 80% of the current gas meters used currently in China are of a conventional mechanical type, and 20% is of an intelligent type. Only about 10% of Chinese gas meter manufacturing enterprises manufactures intelligent gas meters. As such, there is still a huge upside potential in the industry of intelligent gas meters.

The intelligent gas meter mainly includes an IC card gas meter and a far passing gas meter, wherein the IC card gas meter is always electrified, with a relatively high demand for batteries. The IC card gas meter is relatively reliable and is applicable to users who are too sporadic to be managed, such as hotels, school canteens, government departments and commercial networks. However, currently, a contact IC card intelligent gas meter is still a main-stream product commercially. The remote far passing gas meter usually takes a diaphragm type gas meter as a metering basic meter, additionally provided with a flow signal acquiring module and a wireless transmission module, or the like. Beside a gas volume metering function, the remote far passing gas meter also has functions of metering data electro-mechanical conversion, RF identification data transmission and valve remote control, suitable for a gas remote collective and automatic meter reading system of users from residential quarters. However, the remote far passing gas meter is still at an initial stage of scale application.

In 2009, the emergency of bitcoins brings about subversive achievements---blockchain technologies. As a safe ledger database, the blockchain consists of data blocks. A user may search for data in this always up-to-date platform. For a financing institution, the blockchain may accelerate transaction processing, lower costs, avoid intermediary, improve market insight and increase service transparency.

As an underlying technology for encrypting a bitcoin, the blockchain is a great innovation, and is used for combating fraud and illegal transaction. Recently, the technology of blockchain has found applications in many industries, especially utilizing the blockchain as a tool to realize the real energy internet technology. The blockchain has the following benefits. Firstly, trust is ensured based on fair data of the blockchain, and privacy is ensured by an access right of combined public and private keys, realizing confidentiality and reliable metering; secondly, the blockchain is tamper-proofing, the cooperative trust or the enforceable trust is realized among main bodies in a certain manner, so as to enable ubiquitous interaction under the enforceable trust; thirdly, the blockchain, together with big data and artificial intelligence, is combined to form a reliable oracle machine, sign external data, and realize virtually interactive self-discipline control; fourthly, based on peer-to-peer interactive decision making among devices deployed by the blockchain, there is no need to put trust in a centralized platform to make a decision, and the decentralization realizes equipment democracy and distributed decision; fifthly, stochastic game is conducted among main bodies based on explicit interaction rules, and the system represents neutral and benign evolution, which conforms to the marketization rules and competitive evolvement harmony and evolvability.

The blockchain is not only used for disintermediation. The blockchain may subvert the market and the existing value chain, and may also create a new market by releasing a supply which is not developed before. The combination of the blockchain with the energy internet metering system provides reliable technology support for the gas transaction and metering for future energy internet.

SPV is an abbreviation of Simplified Payment Verification. In a Satoshi Nakamoto's paper, this concept is simply mentioned, pointing out that the payment can be verified without running all nodes, as long as a user only saves all block headers. Although the user cannot verify the transaction by himself or herself, if a corresponding transaction may be found from a certain place of the blockchain, the user may know that the network has accepted this transaction, and how many acknowledgements from the network is obtained.

According to the Satoshi Nakamoto's paper, it should be noted that the SPV refers to "payment verification", instead of "transaction verification", which are quite different from each other.

The "payment verification" is relatively simple, only judging whether the transaction for "payment" has been verified, and how much hashrate protection (how much acknowledgement number) is obtained.

Theory: there are three key fields in the block header: prev_block_hash (the hash value of the former block, ensuring the transaction sequence recorded by the blockchain); bits (a calculation difficulty of the current block); and merkle_root_hash (with the merkle tree algorithm, ensuring the authenticity of all transactions in the block).

Advantage: the storage space is saved greatly. The burden of the terminal user is reduced. No matter how large the future trading volume, the size of the block header is constant, only 80 bytes. According to a speed of generating 6 blocks per hour, 52560 blocks are generated each year. When only the block header is saved, the annually increased storage demand is about 4 megabytes, and the accumulated storage demand after 100 years is only 400 megabytes. Even if the user uses a lowest-level device, the load is unaffected completely in normal case.

Currently, the conventional intelligent gas meter is usually to realize the function of paying the gas fee in advance by the stored-value IC card. However, the stored-value IC card has low encryption security, the data is easy to be tampered maliciously, and the monetary loss is easily caused. Therefore, if the technology of blockchain can be applied to the field of intelligent gas meters, the above case may be effectively avoided.

### SUMMARY OF THE INVENTION

An object of the present invention is to provide an intelligent gas meter system with a light wallet, which records gas transactions related to this gas meter by providing a blockchain light wallet module, and combines with a committer in a blockchain network, such that the final gas amount information and gas transaction information are stored in the blockchain network in a distributive and tamper-proofing manner.

In order to realize the above purpose, the present invention provides the following technical solutions.

An intelligent gas meter system with a light wallet, including a CPU, a flow metering and control module, a blockchain light wallet module and a communication module, wherein the flow metering and control module, and the blockchain light wallet module are connected with the CPU respectively; the communication module is wirelessly or wiredly connected with the CPU, the flow metering and control module, and the blockchain light wallet module respectively, wherein:
the CPU is used for processing and operating data in the intelligent gas meter, and controlling data exchange;
the flow metering and control module is configured to control a gas supply of an individual pipe and meter the supplied gas amount, and to transmit the metered gas amount to the CPU;
the blockchain light wallet module performs data interaction with the CPU and an external committer;
the communication module is used for implementing the data transmission among the CPU, the flow metering and control module and the blockchain light wallet module, and the data transmission in the blockchain network.

Further, the flow metering and control module includes a solenoid valve, a flow sensor, an I/V converter and an A/D converter, which are electrically connected successively, wherein:
the solenoid valve is used for controlling the gas flow and adjusting a direction, speed and other parameters of a medium;
the flow sensor is used for measuring gas flow, and generating a corresponding current signal and transmitting the same to the I/V converter;
the I/V converter is used for converting an input current signal into a corresponding voltage analog signal;
the A/D converter is used for converting a voltage analog signal into a digital signal, and further transmitting the digital signal to the CPU.

Further, the blockchain light wallet module is provided with a data layer for storing any one or a combination of the following data:
gas amount transaction data, related to the gas meter node in the blockchain;
time stamp, for recording the time when the gas transaction occurs in the blockchain network;
gas transaction digital currency wallet data, for paying gas transaction fee by using a light wallet address and digital currency;
the data layer is further used for sealing a time stamp on gas transaction data generated at the gas meter node, so as to form a data block and record the same in the blockchain in the temper-proofing manner.

Further, the blockchain light wallet module includes an encryption management unit, for encrypting data in a hardware or software encryption manner, and for managing the encrypted information of the user.

Further, the blockchain light wallet module has a function of digital currency storage or pre-stored expense, and the user may pay the gas fee by the digital currency, and store in the blockchain light wallet module.

Further, the blockchain light wallet module may download block header information, thereby obtaining all transaction block information corresponding to a wallet key.

Further, the blockchain network corresponding to the blockchain light wallet module may be a public blockchain, a consortium blockchain or a private blockchain;
all or partial nodes of the private blockchain or the consortium blockchain have relatively complicated reading, writing and accounting permissions.

Further, the present invention further includes:
a communication interface, connected with the CPU, for data transmission;
the communication interface may be one or a combination of IrDA, RS485 communication, RFID or GPRS wireless, Bluetooth, WIFI, MBUS, 3G/4G/5G communication.

Further, the blockchain light wallet module transmits data processed by the blockchain light wallet module to the blockchain network by the CPU and the communication interface.

Further, the blockchain light wallet module is further used for giving a unique ID to each intelligent gas meter, so as to form a node of the unique ID in the blockchain.

The present invention further provides a method for running the intelligent gas meter system with a light wallet, including the following steps:
S1 controlling, by the flow metering and control module, a gas supply of an individual pipe and metering the supplied gas amount, and transmitting the metered gas amount to the CPU by the communication module;
S2 processing and operating, by the CPU, gas amount data metered by the flow metering and control module;
S3 performing, by the blockchain light wallet, data interaction with the CPU through the communication module, so as to obtain the gas amount data processed and operated by the CPU;
S4 storing, by the blockchain light wallet module, any one or a combination of gas amount transaction data, time stamp, and gas transaction digital currency wallet data through the data layer, and sealing the time stamp on the gas transaction data;
S5 encrypting, by the blockchain light wallet module, data in a hardware or software encryption manner, and for managing the encrypted information of the user;
S6 giving, by the blockchain light wallet, a unique ID to each intelligent gas meter, so as to form a node of the unique ID in the blockchain.
S7 conducting, by the blockchain light wallet, the data interaction with the external committer, downloading the block header information, and obtaining all the transaction block information corresponding to the wallet key;
S8 transmitting, by the blockchain light wallet module, data processed by the blockchain light wallet module to the blockchain network through the CPU and the communication interface.

The present invention further provides a gas meter having the above-mentioned intelligent gas meter system with a light wallet, the gas meter including the intelligent gas meter integrated with the above-mentioned blockchain light wallet module, and the intelligent gas meter is further provided with the above-mentioned CPU, the flow metering and control module, and the communication module.

Further, the present invention further provides an intelligent gas meter system, including a conventional intelligent gas meter and a blockchain router with the blockchain light wallet module, the conventional intelligent gas meter is provided with a CPU, a flow metering and control module, and a communication module, and the blockchain router is provided therein with a blockchain light wallet module and a communication module.

In the specific engineering practice, the present invention has two different solutions depending on a new project or a reconstructive project. For the reconstructive project, the blockchain router (provided with the above-mentioned blockchain light wallet module and the communication module) is added on the conventional intelligent gas meter (including the above-mentioned CPU, the flow metering and control module, and the communication module), so as to realize the blockchain light wallet function; for the new project, the intelligent gas meter integrated therein with the above-mentioned blockchain light wallet module may be mounted directly (this intelligent gas meter further has the above-mentioned CPU, the flow metering and control module, and the communication module).

The present invention has the advantageous effects as follows.

As an important device and node in the future intelligent gas network, the intelligent gas meter system with a light wallet according to the present invention records gas transactions related to this gas meter by providing a blockchain light wallet module, and combines with a committer (which may be a server of a property management company) in a blockchain network, such that the final gas amount information and gas transaction information are stored in the blockchain network in a distributive and tamper-proofing manner.

### BRIEF DESCRIPTION OF THE DRAWINGS

Figure 1 is an architectural diagram of an intelligent gas meter system with a light wallet according to the first embodiment of the present invention;
Figure 2 is an architectural schematic diagram of a blockchain gas transaction network according to the first embodiment of the present invention; and
Figure 3 is an architectural diagram of a gas meter with a blockchain router according to the second embodiment of the present invention.

### DETAILED DESCRIPTION OF THE EMBODIMENTS

The present invention will be further described in combination with drawings. It should be noted that the embodiment provides detailed implementation modes and specific operation process by taking the present technical solution as a premise. However, the protection scope of the present invention is not limited the present embodiment.

### First embodiment

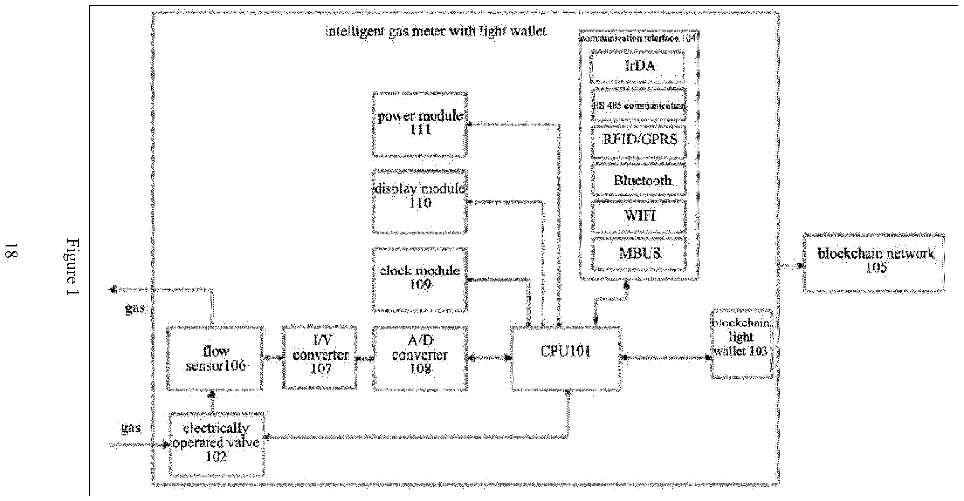

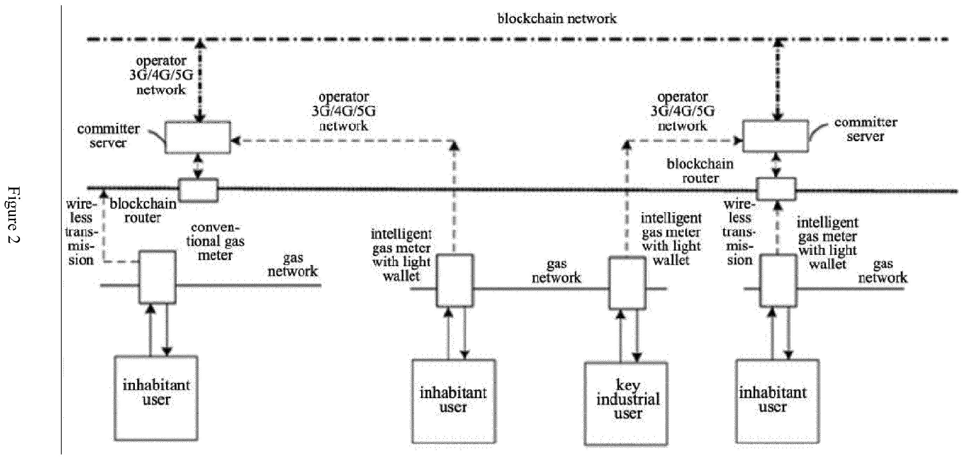

With reference to Figures 1 and 2, the present invention provides an intelligent gas meter system with a light wallet, including a CPU 101, a flow metering and control module, a blockchain light wallet module 103 and a communication module 104, wherein the flow metering and control module, and the blockchain light wallet module 103 are connected with the CPU 101 respectively; the communication module 104 is wirelessly or wiredly connected with the CPU 101, the flow metering and control module, and the blockchain light wallet module 103 respectively, wherein:
the CPU 101 is used for processing and operating data in the intelligent gas meter, and controlling data exchange;
the flow metering and control module is configured to control a gas supply of an individual pipe and meter the supplied gas amount, and to transmit the metered gas amount to the CPU 101;
the blockchain light wallet module 103 performs data interaction with the CPU 101 and an external committer;
the communication module 104 is used for implementing the data transmission among the CPU 101, the flow metering and control module and the blockchain light wallet module 103, and the data transmission in the blockchain network 105.

In the present embodiment, the flow metering and control module includes an solenoid valve 102, a flow sensor 106, an I/V converter 107 and an A/D converter 108, which are electrically connected successively, wherein:
the solenoid valve 102 is used for controlling the gas flow and adjusting a direction, speed and other parameters of a medium;
the flow sensor 106 is used for measuring gas flow, and generating a corresponding current signal and transmitting the same to the I/V converter 107;
the I/V converter 107 is used for converting an input current signal into a corresponding voltage analog signal;
the A/D converter 108 is used for converting a voltage analog signal into a digital signal, and further transmitting the digital signal to the CPU.
In the present embodiment, the blockchain light wallet module 103 is provided with a data layer for storing any one or a combination of the following data:
   gas amount transaction data, related to the gas meter node in the blockchain;
   time stamp, for recording the time when the gas transaction occurs in the blockchain network 105;
   gas transaction digital currency wallet data, for paying gas transaction fee by using a light wallet address and digital currency;
   the data layer is further used for sealing a time stamp on gas transaction data generated at the gas meter node, so as to form a data block and record the same in the blockchain in the temper-proofing manner.

In the present embodiment, the blockchain light wallet module 103 includes an encryption management unit, for encrypting data in a hardware or software encryption manner, and for managing the encrypted information of the user.

In the present embodiment, the blockchain light wallet module 103 has a function of digital currency storage or pre-stored expense, and the user may pay the gas fee by the digital currency, and store in the blockchain light wallet module 103.

In the present embodiment, the blockchain light wallet module 103 may download block header information, thereby obtaining all transaction block information corresponding to a wallet key.

In the present embodiment, the blockchain network 105 corresponding to the blockchain light wallet module 103 may be a public blockchain, a consortium blockchain or a private blockchain;
all or partial nodes of the private blockchain or the consortium blockchain have relatively complicated reading, writing and accounting permissions.

In the present embodiment, the present invention further includes:
a communication interface, connected with the CPU 101, for data transmission;
the communication interface may be one or a combination of IrDA, RS485 communication, RFID or GPRS wireless, Bluetooth, WIFI, MBUS, 3G/4G/5G communication.

In the present embodiment, the blockchain light wallet module 103 transmits data processed by the blockchain light wallet module 103 to the blockchain network 105 by the CPU 101 and the communication interface.

In the present embodiment, the blockchain light wallet module 103 is further used for giving a unique ID to each intelligent gas meter, so as to form a node of the unique ID in the blockchain.

In the present embodiment, the present invention further includes:
a clock module 109, for providing an operation clock for the CPU 101;
a display module 110, for displaying related data; and
a power module 111, for providing a working power for the intelligent gas meter.

### Second embodiment

The present embodiment provides a gas meter having the intelligent gas meter system with a light wallet according to the first embodiment, the gas meter including the intelligent gas meter integrated with the blockchain light wallet module 103, and the intelligent gas meter is further provided with the CPU 101, the flow metering and control module 102, and the communication module 104.

In the present embodiment, each module of the gas meter has the same function and operation manner as in the first embodiment, and is not repeated herein.

### Third embodiment

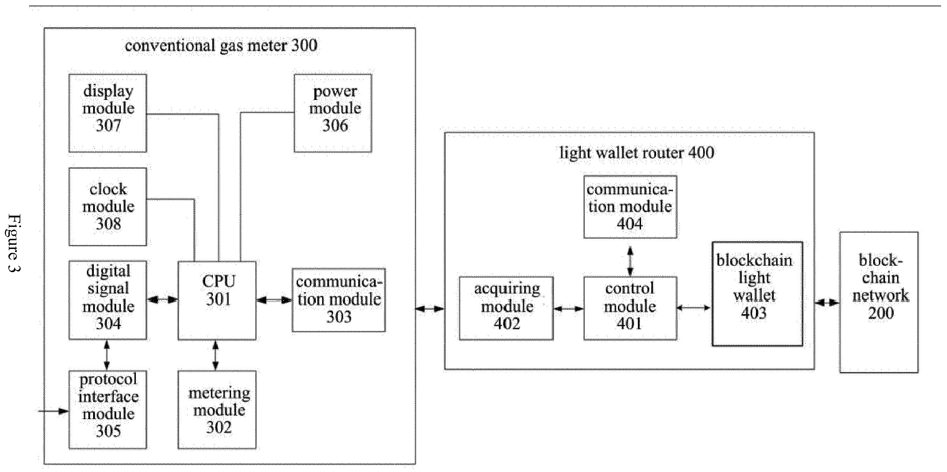

With reference to Figure 3, the present embodiment provides an intelligent gas meter system, including a conventional intelligent gas meter 300 and a blockchain router 400, wherein the conventional intelligent gas meter 300 is provided with the CPU 101, a flow metering and control module 302, and a communication module 303; the blockchain router 400 is provided therein with a blockchain light wallet module 403 and a communication module 404.

In the present embodiment, the conventional intelligent gas meter 300 is further provided with a digital signal module 304, a protocol interface module 305, a power module 306, a display module 307 and a clock module 308.

In the present embodiment, the blockchain router is provided therein with a control module 401 and an acquiring module 402.

In the present embodiment, the conventional intelligent gas meter 300 conducts data transmission with the blockchain router 400 by the communication module 303. The blockchain router 400 conducts data transmission with the blockchain network 200 by the communication module 404.

When the intelligent gas meter system according to the present embodiment is running:
the digital signal module 105 collects the digital signal or the analog signal of the flow metering and control module 302, and converts the analog signal into the digital signal; the protocol interface module 305 manages the communication protocol interface and receives the data input from outside; the power module 306 provides a working power for the conventional intelligent gas meter 300; the display module 307 displays the related data; the clock module 308 provides the operation clock for the CPU 101.

The constituent components of the conventional intelligent gas meter 300 according to the present embodiment include, but not limited to the above-mentioned components, further including other essential components of the conventional gas meter.

According to the above-mentioned technical solution and conception, persons skilled in the art make various corresponding changes and alternations which should fall within the protection scope of the claims of the present invention.

## Claims

1. An intelligent gas meter system with a light wallet, comprising a CPU, a flow metering and control module, a blockchain light wallet module and a communication module, wherein the flow metering and control module, and the blockchain light wallet module are connected with the CPU respectively; the communication module is wirelessly or wiredly connected with the CPU, the flow metering and control module, and the blockchain light wallet module respectively, wherein:
the CPU is used for processing and operating data in the intelligent gas meter, and controlling data exchange;
the flow metering and control module is configured to control a gas supply of an individual pipe and meter the supplied gas amount, and to transmit the metered gas amount to the CPU;
the blockchain light wallet module performs data interaction with the CPU and an external committer;
the communication module is used for implementing the data transmission among the CPU, the flow metering and control module and the blockchain light wallet module, and the data transmission in the blockchain network.

2. The intelligent gas meter system with a light wallet according to claim 1, wherein the flow metering and control module comprises an solenoid valve, a flow sensor, an I/V converter and an A/D converter, which are electrically connected successively.

3. The intelligent gas meter system with a light wallet according to claim 1, wherein the blockchain light wallet module is provided with a data layer for storing any one or a combination of the following data:
gas amount transaction data, related to the gas meter node in the blockchain;
time stamp, for recording the time when the gas transaction occurs in the blockchain network;
gas transaction digital currency wallet data, for paying gas transaction fee;
the data layer is further used for sealing a time stamp on gas transaction data generated at the gas meter node, so as to form a data block and record the same in the blockchain in the temper-proofing manner.

4. The intelligent gas meter system with a light wallet according to claim 1, wherein the blockchain light wallet module comprises an encryption management unit, for encrypting data in a hardware or software encryption manner, and for managing the encrypted information of the user;
the blockchain light wallet module further has a function of digital currency storage or pre-stored expense, and the user may pay the gas fee by the digital currency, and store in the blockchain light wallet module.

5. The intelligent gas meter system with a light wallet according to claim 1, wherein the blockchain light wallet module downloads block header information, thereby obtaining all transaction block information corresponding to a wallet key.

6. The intelligent gas meter system with a light wallet according to claim 1, wherein the blockchain network corresponding to the blockchain light wallet module may be a public blockchain, a consortium blockchain or a private blockchain;
all or partial nodes of the private blockchain or the consortium blockchain have relatively complicated reading, writing and accounting permissions.

7. The intelligent gas meter system with a light wallet according to claim 1, further comprising:
a communication interface, connected with the CPU, for data transmission;
the communication interface may be one or a combination of IrDA, RS485 communication, RFID or GPRS wireless, Bluetooth, WIFI, MBUS, 3G/4G/5G communication;
the blockchain light wallet module transmits data processed by the blockchain light wallet module to the blockchain network by the CPU and the communication interface.

8. The intelligent gas meter system with a light wallet according to claim 1, wherein the blockchain light wallet module is further used for giving a unique ID to each intelligent gas meter, so as to form a node of the unique ID in the blockchain.

9. A method for running the intelligent gas meter system with a light wallet according to any one of claims 1-8, comprising the following steps:
S1 controlling, by the flow metering and control module, a gas supply of an individual pipe and metering the supplied gas amount, and transmitting the metered gas amount to the CPU by the communication module;
S2 processing and operating, by the CPU, gas amount data metered by the flow metering and control module;
S3 performing, by the blockchain light wallet, data interaction with the CPU through the communication module, so as to obtain the gas amount data processed and operated by the CPU;
S4 storing, by the blockchain light wallet module, any one or a combination of gas amount transaction data, time stamp, and gas transaction digital currency wallet data through the data layer, and sealing the time stamp on the gas transaction data;
S5 encrypting, by the blockchain light wallet module, data in a hardware or software encryption manner, and for managing the encrypted information of the user;
S6 giving, by the blockchain light wallet, a unique ID to each intelligent gas meter, so as to form a node of the unique ID in the blockchain.
S7 conducting, by the blockchain light wallet, the data interaction with the committer, downloading the block header information, and obtaining all the transaction block information corresponding to the wallet key;
S8 transmitting, by the blockchain light wallet module, data processed by the blockchain light wallet module to the blockchain network through the CPU and the communication interface.

10. A gas meter having the above-mentioned intelligent gas meter system with a light wallet according to any one of claims 1-8, wherein the gas meter comprising the intelligent gas meter integrated with the blockchain light wallet module, and the intelligent gas meter is further provided with the above-mentioned CPU, the flow metering and control module, and the communication module.

11. An intelligent gas meter system, comprising a conventional intelligent gas meter and a blockchain router with the blockchain light wallet module, the conventional intelligent gas meter is provided with a CPU, a flow metering and control module, and a communication module, and the blockchain router is provided therein with a blockchain light wallet module and a communication module.
